# EUROPÄISCHE PATENTANMELDUNG

(11) **EP 1 400 276 A1**
(43) Veröffentlichungstag der Anmeldung: **24.03.2004**
(21) Anmeldenummer: 03019548.1
(22) Anmeldetag: 29.08.2003
(51) Int. Cl.: B01D 53/04

(54) **Vorrichtung und Verfahren zur Aufbereitung eines Filters**

(30) Priorität: 17.09.2002 DE 10243797
(71) Anmelder: Deutsches Zentrum für Luft- und Raumfahrt e.V., 51147 Köln (DE)
(72) Erfinder: Renz, Günther, Dr., 70794 Filderstadt (DE); Nedele, Martin, Dr., 72768 Reutlingen (DE)
(74) Vertreter: Regelmann, Thomas, Dr.

(57) **Zusammenfassung**

Um eine Vorrichtung zur Aufbereitung eines Filters bereitzustellen, wird vorgeschlagen, einen Filterhalter vorzusehen, in dem der Filter aufheizbar ist, und eine Pyrolysevorrichtung vorzusehen, welcher von dem Filterhalter Austreibabgase zuführbar sind, wobei die Pyrolysevorrichtung eine Pyrolysezelle aufweist, in welcher Austreibabgas mit einer stehenden elektromagnetischen Welle beaufschlagbar ist.

## Beschreibung

Die Erfindung betrifft eine Vorrichtung und ein Verfahren zur Aufbereitung eines Filters.

Üblicherweise werden Filter und insbesondere Adsorptionsfilter wie Kohlefilter nach Beladung entsorgt, das heißt insbesondere als Sondermüll gelagert oder verbrannt.

Der Erfindung liegt die Aufgabe zugrunde, eine Vorrichtung und ein Verfahren zur Aufbereitung eines Filters bereitzustellen.

Diese Aufgabe wird erfindungsgemäß dadurch gelöst, daß die Vorrichtung einen Filterhalter umfaßt, in dem der Filter aufheizbar ist, und eine Pyrolysevorrichtung umfaßt, welcher von dem Filterhalter Austreibabgase zuführbar sind, wobei die Pyrolysevorrichtung eine Pyrolysezelle aufweist, in welcher Austreibabgas mit einer stehenden elektromagnetischen Welle beaufschlagbar ist.

Eine Pyrolysevorrichtung, in der sich Schadstoffe in einem Fluid und insbesondere Luft mittels eines Mikrowellenplasmas pyrolysieren lassen (mit oder ohne Sauerstoffzutritt) ist in der deutschen Anmeldung Nr. 101 43 375.1 vom 5. September 2001 des gleichen Anmelders beschrieben. In einer solchen Pyrolysevorrichtung läßt sich eine hohe Abbaurate bezüglich Verunreinigungen wie halogenierte Kohlenwasserstoffe oder aromatischen Kohlenwasserstoffen oder weiteren organischen und metall-organischen Verbindungen erreichen. Die beim Ausheizen des Filters entstehenden Austreibabgase lassen sich dann der Pyrolysevorrichtung zuführen und dort erfolgt dann eine Reinigung, wobei die organischen Moleküle in unbedenkliche Bestandteile wie CO₂, Wasser und dergleichen zerlegt werden. Dadurch läßt sich der Filter effektiv reinigen, das heißt es läßt sich eine Desorption von Schadstoffen durchführen, ohne daß die Umgebungsluft dadurch belastet wird. Der Filter ist somit regenerierbar und somit mehrfach verwendbar.

Insbesondere umfaßt die Pyrolysevorrichtung einen Mikrowellengenerator, einen an den Mikrowellengenerator gekoppelten Hohlleiter und ein Fluidrohr, durch welches in einer Fluidführungsrichtung Austreibabgase quer zur Ausbreitungsrichtung der stehenden elektromagnetischen Welle führbar ist. Eine solche Pyrolysevorrichtung ist in der EP 0 489 078 B1 und in der deutschen Anmeldung Nr. 101 43 375.1 beschrieben, auf die Bezug genommen wird. Mit solchen Pyrolysevorrichtungen läßt sich eine hohe Abbaurate von organischen Verunreinigungen in dem Austreibabgas erreichen.

Insbesondere ist dabei die Pyrolysezelle in dem Fluidrohr gebildet und durch in der Fluidführungsrichtung beabstandete Metallgitter begrenzt. Durch solche Metallgitter läßt sich eine Verschleppung des Mikrowellenplasmas weitgehend verhindern, wie in der Anmeldung Nr. 101 43 375.1 beschrieben ist.

Die Vorrichtung weist einen hohen Energiewirkungsgrad auf, wenn der Filter in dem Filterhalter mittels Abwärme mit der Pyrolysevorrichtung heizbar ist. Diese Abwärme kann also benutzt werden, um den Filter aufzuheizen. Darüber hinaus kann auch noch eine weitere externe Heizungsvorrichtung für den Filterhalter und/oder Filter in dem Filterhalter vorgesehen sein.

Insbesondere ist eine Leitung für Abwärme zwischen der Pyrolysevorrichtung und dem Filterhalter angeordnet. Die Pyrolysevorrichtung wird üblicherweise gekühlt. Über erhitztes Wärmeübertragungsmedium läßt sich dann über diese Leitung Abwärme dem zu regenerierenden Filter zuführen.

Ganz besonders vorteilhaft ist es, wenn die Aufheizung des Filters steuerbar ist. Dadurch wird es ermöglicht, den Filter langsam aufzuheizen, so daß eine allmähliches Austreiben von Filterverunreinigungen durch Desorption ermöglicht wird. Es kann erreicht werden, daß die Schadstoffe allmählich aus dem Filter ausgasen und die Schadstoffkonzentration nicht sprunghaft steigt. Dadurch wiederum ist ein kontinuierlicher Betrieb der Pyrolysevorrichtung zur Reinigung der Austreibabgase möglich, wobei insbesondere die Schadstoffkonzentration unterhalb der Sättigungsgrenze bleibt, so daß die Pyrolysevorrichtung in einem optimierten Arbeitsbereich bezüglich der Pyrolyse von Schadstoffen in den Austreibabgasen arbeitet.

Vorteilhafterweise ist der Pyrolysevorrichtung Luft und/oder Sauerstoff zuführbar, um bei der Pyrolyse aktivierten Sauerstoff zur Verfügung zu haben, um so die Abbaurate zu erhöhen.

Insbesondere ist dabei ein Anschluß für eine Luft- und/oder Sauerstoffzuführung an eine Austreibabgas-Leitung zwischen dem Filterhalter und der Pyrolysevorrichtung angeordnet, um so auf einfache Weise eine Einkopplung von Luft und/oder Sauerstoff in die Pyrolysevorrichtung zu ermöglichen. Es kann dann auch in einem solchen Luftstrom oder Sauerstoffstrom Austreibabgas mitgeführt werden.

Ganz besonders vorteilhaft ist es, wenn der Filterhalter so ausgebildet ist, daß Austreibabgase vollständig der Pyrolysevorrichtung zuführbar sind. Beispielsweise ist ein Gehäuse des Filterhalters so gekapselt, daß Austreibabgase nur an einem Austritt auskoppelbar sind, welcher wiederum mit der Pyrolysevorrichtung in Verbindung steht. Dadurch wird eine Belastung der Umgebung mit Austreibabgasen vermieden.

Die erfindungsgemäße Vorrichtung kann selbständig eingesetzt werden oder integriert sein in eine Reinigungsanlage zur Reinigung eines schadstoffbelasteten Fluids, wobei der Filter Teil dieser Reinigungsanlage ist. Bei der Integration in eine solche Anlage läßt sich ein Filter an seinem Einbauort mittels der erfindungsgemäßen Vorrichtung aufbereiten.

Insbesondere ist dabei zur Reinigung des Fluids der Filter der Pyrolysevorrichtung vorgeschaltet. Die Pyrolysevorrichtung läßt sich dann auf zweierlei Arten verwenden, nämlich während des normalen Betriebs der Reinigungsanlage zur Reinigung des Fluids bei vorgeschaltetem Filter und während einem Regenerationsbetrieb zur Aufbereitung des Filters.

Die eingangs genannte Aufgabe wird bei dem Verfahren zur Aufbereitung des Filters erfindungsgemäß dadurch gelöst, daß der Filter erhitzt wird und Austreibabgase in einem Mikrowellenplasma pyrolisiert werden.

Das erfindungsgemäße Verfahren weist die bereits im Zusammenhang mit der erfindungsgemäßen Vorrichtung beschriebenen Vorteile auf.

Weitere vorteilhafte Ausgestaltungen wurden ebenfalls im Zusammenhang mit der erfindungsgemäßen Vorrichtung erläutert.

Insbesondere ist es vorgesehen, daß Abwärme der Pyrolysevorrichtung zur Pyrolyse der Austreibgase den Filter heizen, um diesen auszugasen.

Günstig ist es, wenn ein Austreibvorgang an einem Filter gesteuert erfolgt, um so zum einen ein optimales Ausgasen und ein weitgehend vollständiges Austreiben von Schadstoffen zu erhalten und zum anderen eine optimierte Anpassung an die Betriebserfordernisse der Pyrolysevorrichtung zu erreichen. Insbesondere läßt sich dann ein kontinuierlicher Betrieb der Pyrolysevorrichtung durchführen, wobei bei entsprechender Steuerung des Aufheizvorgangs die Schadstoffkonzentration in Austreibabgasen unterhalb der Sättigungsgrenze bleibt, so daß die Pyrolysevorrichtung optimiert arbeiten kann.

Die nachfolgende Beschreibung einer bevorzugten Ausführungsform dient im Zusammenhang mit der Zeichnung der näheren Erläuterung der Erfindung.

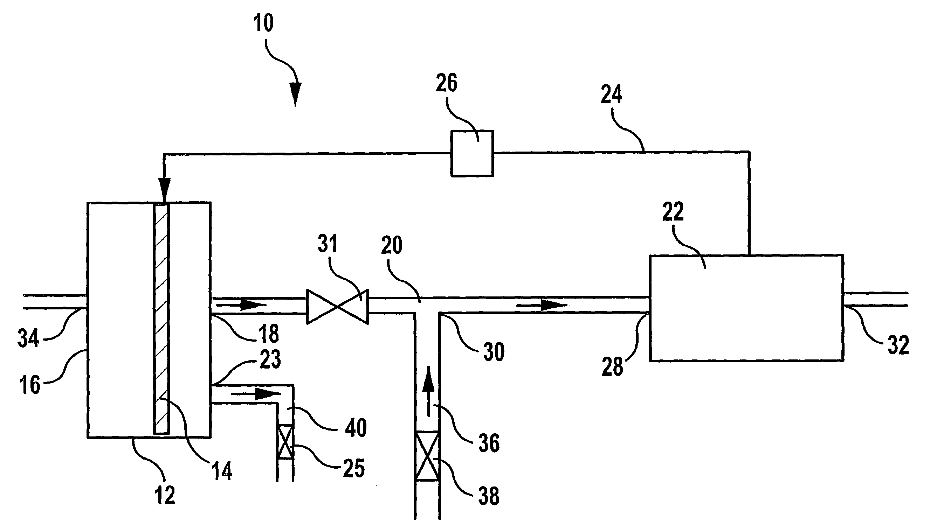

Die einzige
- Figur 1: zeigt eine schematische Ansicht eines Ausführungsbeispiels einer erfindungsgemäßen Vorrichtung zur Aufbereitung eines Filters.

Ein Ausführungsbeispiel einer erfindungsgemäßen Vorrichtung zur Aufbereitung eines Filters, welche in Figur 1 als Ganzes mit 10 bezeichnet ist, umfaßt einen Filterhalter 12, in dem ein oder mehrere Filter 14 positionierbar sind. Bei dem Filter 14 handelt es sich beispielsweise um ein Adsorptionsfilter wie einem Kohlefilter.

Der Filterhalter 12 weist ein gasdichtes Gehäuse 16 mit einem Ausgangsanschluß 18 auf. Dieser Ausgangsanschluß ist über eine Leitung 20 mit einer Pyrolysevorrichtung 22 verbunden, so daß Austreibabgase des Filters 14 der Pyrolysevorrichtung 22 zur Reinigung zuführbar sind.

Das Gehäuse 14 weist einen weiteren Ausgang 23 auf, über den sich unter Umgehung der Pyrolysevorrichtung 22 Fluid abführen laßt. Diesem Ausgang 23 ist dabei ein Sperrventil 25 zugeordnet.

Die Pyrolysevorrichtung 22 umfaßt einen Mikrowellengenerator, einen Hohlleiter, welcher an den Mikrowellengenerator gekoppelt ist und in dem eine stehende Welle erzeugbar ist, und ein Fluidrohr, durch welches in einer Fluidführungsrichtung ein Fluid quer zur Ausbreitungsrichtung der stehenden Welle führbar ist, wobei in dem Fluidrohr eine Pyrolysezelle gebildet ist, in der das Fluid durch die stehende elektromagnetische Welle beaufschlagbar ist. Bei dem Fluid handelt es sich insbesondere um Austreibabgase des Filters 14.

Eine derartige Vorrichtung ist in der EP 0 489 078 B1 beschrieben, auf die ausdrücklich Bezug genommen wird. Ferner ist eine solche Vorrichtung in der Patentanmeldung Nr. 101 43 375.1 vom 5. September 2001 des gleichen Anmelders beschrieben. Auch auf diese Anmeldung wird ausdrücklich Bezug genommen.

Insbesondere kann es vorgesehen sein, daß die Pyrolysezelle durch zwei beabstandete Metallgitter begrenzt ist, wie in der Anmeldung Nr. 101 43 375.1 beschrieben.

In der Pyrolysevorrichtung 22 lassen sich chemische Verbindung pyrolysieren, das heißt thermisch zersetzen mit oder ohne Sauerstoffzutritt. Die thermische Zersetzung erfolgt erfindungsgemäß über Mikrowellenbeaufschlagung in einem Mikrowellenplasma.

Abwärme der Pyrolysevorrichtung 22 läßt sich über eine Leitung 24 zu dem Filterhalter 12 führen, um damit den Filter 14 zu heizen. Die Abwärme wird über ein Wärmeübertragungsmedium wie Wasser von der Pyrolysevorrichtung 22 zu dem Filterhalter 12 übertragen. Die Wärmebeaufschlagung des Filterhalters 12 ist dabei über eine Steuerungsvorrichtung 26 steuerbar.

Daneben können noch weitere externe Heizquellen für den Filterhalter 12 zur Heizung des Filters 14 vorgesehen sein.

Die Leitung 20 ist über einen Eingangsanschluß 28 an die Pyrolysevorrichtung 22 gekoppelt.

Über einen Anschluß 30, welcher in die Leitung 20 mündet, läßt sich der Pyrolysevorrichtung 22 zur Unterstützung der Pyrolyse Luft und/oder Sauerstoff zuführen. In eine Zuführungsleitung 36 ist dabei ein steuerbares Ventil 38 angeordnet, um die Zuführungsmenge steuern zu können bzw. um die Zuführung sperren zu können.

In der Leitung 20 kann auch ein Sperrventil 31 angeordnet sein, um die Zuführung von schadstoffbelasteten Austreibgasen zu der Pyrolysevorrichtung 22 zu sperren.

Die erfindungsgemäße Vorrichtung 10 funktioniert wie folgt:

Ein belasteter Filter 14, welcher in einem Reinigungsprozess Schadstoffe adsorbiert hat, wird zur Aufbereitung, das heißt zur Regenerierung, an dem Filterhalter 12 positioniert. Es erfolgt dann ein gesteuertes Aufheizen des Filters 14, wobei die Abwärme der Pyrolysevorrichtung 22 zur Aufheizung genutzt wird.

Durch den Aufheizvorgang gasen Schadstoffe aus, die dann der Pyrolysevorrichtung 22 zur Pyrolyse zugeführt werden. In der Pyrolysevorrichtung erfolgt in einem Mikrowellenplasma eine Zersetzung der Schadstoffe. An einem Ausgang 32 der Pyrolysevorrichtung 22 wird dann gereinigte Luft, die im wesentlichen schadstoffrei ist, ausgekoppelt.

Durch Steuerung der Aufheizung des Filters 14 läßt sich erreichen, daß der Filter allmählich ausgast, das heißt insbesondere der Filter 14 Schadstoffe allmählich und nicht sprunghaft abgibt. Es läßt sich dann ein kontinuierlicher Betrieb der Pyrolysevorrichtung 22 erreichen, wobei mit einer Schadstoffkonzentration weit unterhalb der Sättigung fahrbar ist, so daß eine effektive Reinigung der Austreibabgase des Filters 14 ermöglicht ist.

Durch die erfindungsgemäße Vorrichtung lassen sich Filter nach Gebrauch, das heißt nach vollständiger Belastung, wieder aufbereiten, so daß sich Filter wie Kohlefilter mehrfach verwenden lassen. Die Austreibabgase werden durch die Pyrolysevorrichtung 22 gereinigt, so daß die Umgebung nicht belastet wird.

Die erfindungsgemäße Vorrichtung 10 kann als separate Vorrichtung aufgebaut sein, um den Filter 14 zu reinigen, sie kann aber auch integraler Bestandteil einer Reinigungsanlage für ein Fluid, wie beispielsweise einer Luftreinigungsanlage sein, in welcher schadstoffbelastete Luft zuerst den Filter 14 und anschließend die Pyrolysevorrichtung 22 durchläuft. In dem Filter 14 wird ein größerer Anteil von Schadstoffen ausgefiltert, um so insbesondere in der Pyrolysevorrichtung unterhalb der Sättigungsgrenze arbeiten zu können; dadurch arbeitet die Pyrolysevorrichtung wiederum effektiv mit hoher Ausbeute. Zu einer effektiven Pyrolyse wird der Pyrolysevorrichtung 22 Luft und/oder Sauerstoff über den Anschluß 30 zugeführt.

Durch die Vorrichtung 10 läßt sich dann der Filter nach vollständiger Belastung reinigen, wobei keine Umbaumaßnahmen notwendig sind, das heißt der Filter 14 läßt sich am Ort reinigen.

Bei einer Variante einer Ausführungsform weist dann das Gehäuse 16 einen Eingangsanschluß 34 auf, mittels welchem sich schadstoffbelastetes Fluid wie Luft durch das Gehäuse 16 und damit durch den Filter 14 transportieren läßt.

Im Reinigungsbetrieb für das Fluid dient die Pyrolysevorrichtung 22 zur Reinigung des schadstoffbelasteten Fluids nach Vorreinigung durch den Filter 14. Im Reinigungsbetrieb für den Filter 14 werden in der Pyrolysevorrichtung 22 Austreibabgase des Filters 14 zersetzt, nachdem dieser aufgeheizt wurde, um eine Schadstoffbeladung des Filters 14 auszutreiben.

## Patentansprüche

1. Vorrichtung zur Aufbereitung eines Filters (14), umfassend einen Filterhalter (12), in dem der Filter (14) aufheizbar ist, und eine Pyrolysevorrichtung (22), welcher von dem Filterhalter (12) Austreibabgase zuführbar sind, wobei die Pyrolysevorrichtung (22) eine Pyrolysezelle aufweist, in welcher Austreibabgas mit einer stehenden elektromagnetischen Welle beaufschlagbar ist.

2. Vorrichtung nach Anspruch 1, **dadurch gekennzeichnet, daß** die Pyrolysevorrichtung (22) einen Mikrowellengenerator, einen an den Mikrowellengenerator gekoppelten Hohlleiter und ein Fluidrohr umfaßt, durch welches in einer Fluidführungsrichtung Austreibgase quer zur Ausbreitungsrichtung der stehenden elektromagnetischen Welle führbar ist.

3. Vorrichtung nach Anspruch 2, **dadurch gekennzeichnet, daß** die Pyrolysezelle in dem Fluidrohr gebildet ist.

4. Vorrichtung nach einem der vorangehenden Ansprüche, **dadurch gekennzeichnet, daß** die Pyrolysezelle durch in der Fluidführungsrichtung beabstandete Metallgitter begrenzt ist.

5. Vorrichtung nach einem der vorangehenden Ansprüche, **dadurch gekennzeichnet, daß** der Filter (14) in dem Filterhalter (12) mittels Abwärme der Pyrolysevorrichtung (22) heizbar ist.

6. Vorrichtung nach Anspruch 5, **dadurch gekennzeichnet, daß** eine Leitung (24) für Abwärme zwischen der Pyrolysevorrichtung (22) und dem Filterhalter (12) angeordnet ist.

7. Vorrichtung nach einem der vorangehenden Ansprüche, **dadurch gekennzeichnet, daß** die Aufheizung des Filters (14) steuerbar ist.

8. Vorrichtung nach einem der vorangehenden Ansprüche, **dadurch gekennzeichnet, daß** der Pyrolysevorrichtung (22) Luft und/oder Sauerstoff zuführbar ist.

9. Vorrichtung nach Anspruch 8, **dadurch gekennzeichnet, daß** ein Anschluß (30) für eine Luft- und/oder Sauerstoffzuführung an eine Austreibabgas-Leitung (20) zwischen dem Filterhalter (12) und der Pyrolysevorrichtung (22) angeordnet ist.

10. Vorrichtung nach einem der vorangehenden Ansprüche, **dadurch gekennzeichnet, daß** der Filterhalter (12) so ausgebildet ist, daß Austreibabgase vollständig der Pyrolysevorrichtung (22) zuführbar sind.

11. Reinigungsanlage zur Reinigung eines schadstoffbelasteten Fluids, welches einen Filter (14) aufweist, und welche die Vorrichtung zum Aufbereiten des Filters (14) gemäß einem der vorangehenden Ansprüche umfaßt.

12. Reinigungsanlage nach Anspruch 11, **dadurch gekennzeichnet, daß** zur Reinigung des Fluids der Filter (14) der Pyrolysevorrichtung (22) vorgeschaltet ist.

13. Verfahren zur Aufbereitung eines Filters, bei welchem der Filter erhitzt wird und Austreibabgase in einem Mikrowellenplasma pyrolysiert werden.

14. Verfahren nach Anspruch 13, **dadurch gekennzeichnet, daß** Abwärme einer Pyrolysevorrichtung zur Pyrolyse der Austreibabgase den Filter heizen.

15. Verfahren nach Anspruch 13 oder 14, **dadurch gekennzeichnet, daß** dem Mikrowellenplasma Luft und/oder Sauerstoff zugeführt wird.

16. Verfahren nach einem der Ansprüche 13 bis 15, **dadurch gekennzeichnet, daß** ein Austreibvorgang an einem Filter gesteuert erfolgt.
